# EUROPEAN PATENT SPECIFICATION

(11) **EP 0 730 085 B1**
(45) Date of publication and mention of the grant of the patent: **19.01.2000**
(21) Application number: 96102993.1
(22) Date of filing: 28.02.1996
(51) Int. Cl.: F01L 3/22

(54) **A cylinder head and a method for producing a valve seat**
Zylinderkopf und Verfahren zur Herstellung eines Ventilsitzes
Culasse et méthode pour fabriquer un siège de soupapes

(30) Priority: 28.02.1995 JP 4080095; 13.03.1995 JP 7932695
(43) Date of publication of application: 04.09.1996
(60) Divisional application: 97117178.0
(73) Proprietor: YAMAHA HATSUDOKI KABUSHIKI KAISHA, Iwata-shi Shizuoka-ken, 438 (JP)
(72) Inventor: Adachi, Shuhei, Iwata-shi, Shizuoka-ken (JP); Inami, Junichi, Iwata-shi, Shizuoka-ken (JP)
(74) Representative: Grünecker, Kinkeldey, Stockmair & Schwanhäusser Anwaltssozietät

(56) References cited:
- EP-A- 0 064 367
- EP-A- 0 092 683
- EP-A- 0 228 282
- WO-A-94/27767
- US-A- 3 428 035
- US-A- 4 502 433

## Description

This invention relates to a cylinder head in particular for a 4-cycle stroke internal combustion engine, comprising the features of the preamble portion of claim 1. Further, the invention relates to a method of producing a valve seat within a cylinder head.

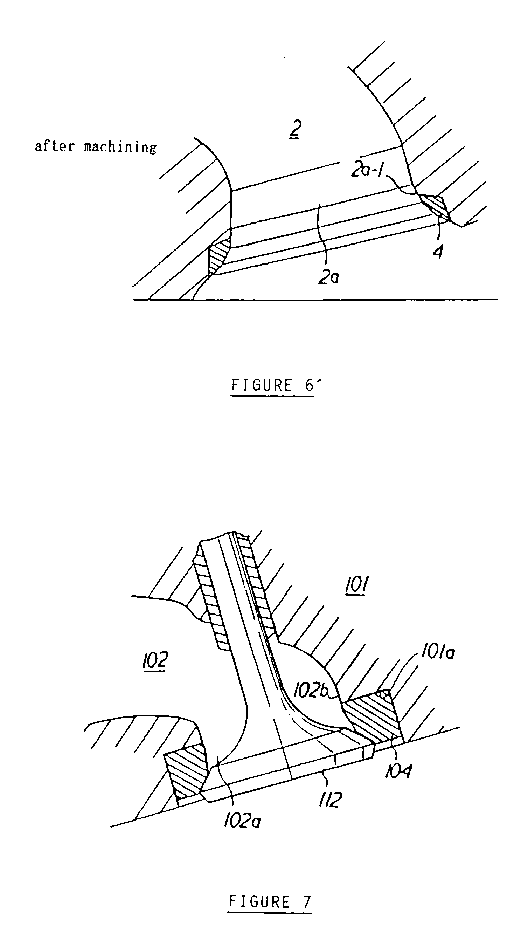

In the 4-cycle stroke internal combustion engine, the intake and exhaust ports opened into the combustion chamber are opened or closed by intake and exhaust valves at proper timings so that gas may be exchanged as required, and a valve seat insert on which an intake or exhaust valve is intermittently seated is assembled on the peripheral portion of the intake or exhaust port of the cylinder head usually through press-fitting. For example, as shown in Fig.7, a valve seat insert 104 on which an intake valve 112 is to be intermittently seated is assembled on the peripheral portion of the intake port 102a of the cylinder head 101 through press-fitting.

Hereupon, valve multiplication of the 4-cycle stroke engine is recently in progress for higher engine output, and, since a plurality of intake and exhaust ports are provided close to each other on the cylinder head for each cylinder, the distances between intake and/or exhaust ports are becoming smaller.

However, if a valve seat insert is pressed into the intake or exhaust port peripheral edge as before under the circumstances described above, a crack due to strength insufficiency may be caused between ports of the cylinder head.

Further, when a structure is employed in which the valve seat insert is press-fitted, a large seat 101a required for press-fitting the valve seat insert 104 becomes necessary on the periphery of the intake port 102a, and, since the smallest inner diameter portion of the valve seat insert 104 constitutes the throat portion 102b of the intake passage 102, the smallest inner diameter of the valve seat insert 104 has become the throat portion diameter of the intake passage 102. Therefore, the intake passage 102 could not be brought so close to the combustion chamber, which, as is also the case with the exhaust side (not shown), increases the total height of the engine, limits the engine design, increases the resistance against the gas flow in intake and exhaust passages, weakens formation of intake swirl and intake tumble in the combustion chamber and might deteriorate the engine performance, exhaust gas property and fuel consumption.

In order to make the valve seat portion of the cylinder head made of light weight aluminum alloy wear resistant and excellent in high temperature strength to assure airtightness between the valve face and the port, a conventional common practice has been to form a recess at each of the opening peripheries of the intake and exhaust ports of the cylinder head body made of aluminum alloy, to press-fit an annular seat ring member made of iron-based sintered alloy into the recess, and to finish-grind the area around the press-fit member to form a valve seat of a different material integrally with the cylinder head body.

With the cylinder head having the valve seat of a different material press-fit into the cylinder head body, however, radial and axial dimensions around the press-fit valve seat have to be certain values or more to prevent the press-fit valve seat from coming off even when the temperature of the cylinder head rises during the engine operation. As a result, the cross-sectional area of the valve seat becomes one of the major restricting factors to the engineering design around the cylinder head ports.

Furthermore, because of a lower heat conductivity of the iron-based sintered alloy as the valve seat material in comparison with that of the aluminum alloy casting for the cylinder head body and because of the large cross-sectional area of the press-fit valve seat, heat transfer from the valve face and exhaust gas to the cylinder head body tends to be restricted. As a result, cooling property of the cylinder head is lowered, resulting in abnormal combustion and damages due to rise in the valve temperature.

Furthermore, because of a larger coefficient of thermal expansion of the cylinder head body material than that of the valve seat material, a gap is produced between the cylinder head body and the valve seat when their temperature rises beyond a certain value. This further hinders thermal transfer from the valve seat to the cylinder head body and causes the valve seat itself to overheat. As a result, resistance against wear of the valve seat is lowered, the valve seat is deformed, worn, and damaged.

Alternatively, a method for solving the valve seat problems associated with the press fit is publicly known as a prior art (Japanese Unexamined Patent Publication Sho 62-150014) in which a valve seat material having excellent properties of heat resistance, wear resistance, and corrosion resistance is laser-cladded to the valve seat forming area of the cylinder head body so that the cladded layer forms the valve seat portion. A method for increasing the melt adhesion rate between the cladded layer and the cylinder head body of the cylinder head is further publicly known as a prior art (Japanese Unexamined Patent Publication Hei 2-196117) in which the melt adhesion surface of the cylinder head body is press rolled in advance to form a plastically deformed layer followed by the laser cladding.

However, since any of the cylinder heads with a valve seat formed by the conventional laser cladding involves melting of the valve seat material, the aluminum alloy of the cylinder head body once melts and solidifies in the area near the bond interface. Therefore, there are problems that the area near the bond interface tends to contain defects such as blow holes and gross porosities, and that the strength in the area bonded by melting and solidification is likely to lower during extended periods of engine operation at high temperatures.

Therefore, it has been already proposed a cylinder head for solving the problems associated with the conventional cylinder head for internal combustion engines as described above. The proposed cylinder head is made as follows: A valve seat material with a surface treatment coat such as copper plating layer is metallurgically bonded without leaving a melt reaction layer to a cylinder head body with its valve seat portion machined in a finished shape. By the metallurgical bond, a plastically deformed layer is formed at least on the cylinder head body side along the bond interface.

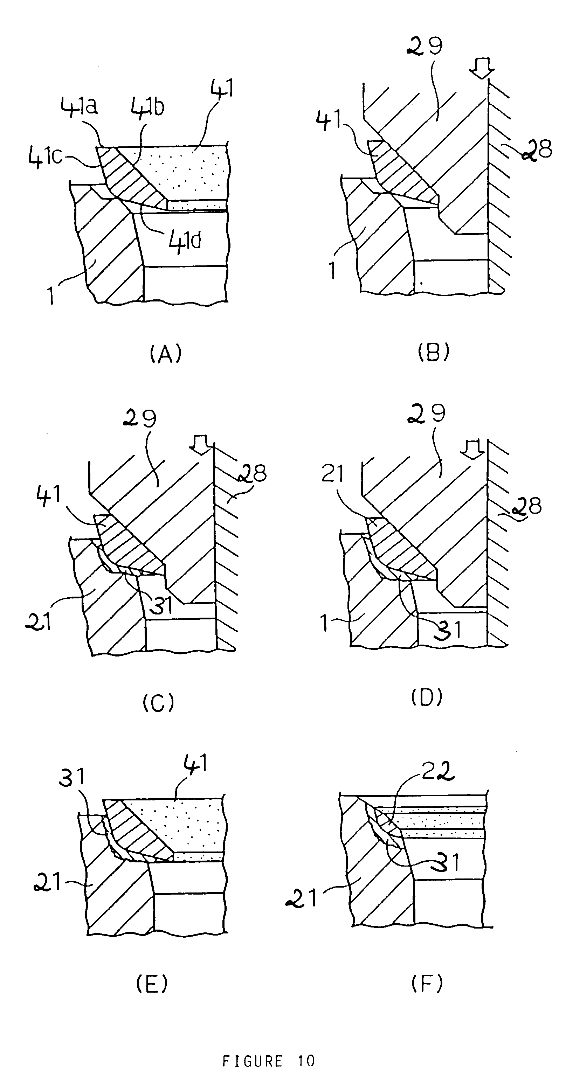

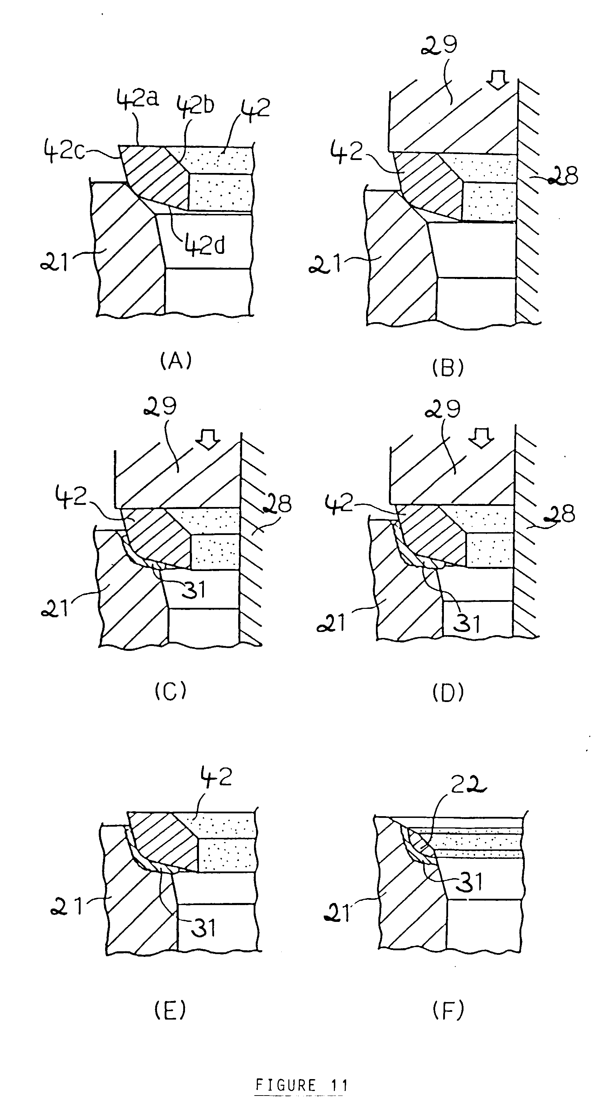

A cylinder head with a valve seat 22 with a relatively small cross-sectional area as shown in FIGs.10(F) and 11(F) is formed by an internal tapered surface pressing method as shown in FIGs.10 (A) -11(F) or by a top surface pressing method as shown in FIGs.11 (A) -11(F). In both methods, a seat ring 41 or 42 is metallurgically bonded to a cylinder head body 21 so that a plastically deformed layer 31 is formed without leaving a melt reaction layer near the machine-finished bond interface, followed by finish cut machining.

When such a cylinder head is formed by the top surface pressing method as shown in FIG. 11, since the pressing force applied by the electrode (9) works from the top side of the seat ring 42 downward, the pressing force works in the direction to compress the seat ring 42 radially inward, there is no danger of breakage even if a conventional valve seat material were used. However, a problem arises that the bond strength on the steep side 42c is weaker than that on the bottom side 42d of the seat ring 42 on the bond surface between the cylinder head body 21 and the seat ring 42 .

When the forming is made by the internal tapered surface pressing method as shown in FIG. 10 on the other hand, since the pressing force applied by the electrode 29 works from the internal tapered surface 41b approximately equally to the steep surface 41c and the bottom surface 41d so that the bond strength on the steep surface 41c is significantly improved in comparison with that obtained with the top surface pressing method. On the other hand, however, since the pressing force works to expand the seat ring 41 radially outward, a problem arises that the valve seat 22 formed on the cylinder head has a high probability of producing cracks.

A cylinder head as defined in the preamble of claim 1 is known from EP-A2-0 228 282. According to EP-A2-0 228 282, an intermediate layer is formed between a main aluminum alloy body portion of the cylinder head and a copper alloy cladding layer of a valve seat. The alloy material of the intermediate layer is produced by alloyingly mixing the elements of the aluminum alloy of the cylinder head and the copper alloy of the valve seat. The main aluminum alloy body portion of the cylinder head, the intermediate alloy layer and the copper alloy cladding layer are blending into one another and are continuous with one another.

The present invention aims at even further improving the bonding strength between a valve seat and the cylinder head and restricting the occurrence of defects due to cracks and reducing the size of the valve seat rings. Further, the invention aims at providing a method of making such a valve seat within a cylinder head.

This technical problem is solved by a cylinder head comprising the features of claim 1.

According to the invention, this objective is solved for a method for producing a valve seat as indicated above which comprises the steps of: (a) placing a valve seat insert onto the surface of an intake port or exhaust port, respectively within said cylinder head, (b) applying a voltage between the abutting surfaces of said valve seat insert and said cylinder head and simultaneously pressing said valve seat insert against said cylinder head so that said valve seat insert and said cylinder head are metallurgical bonded with each other, and (c) applying a finishing treatment to said bonded pieces to receive the desired valve seat, wherein said valve seat insert comprises a top surface opposing a pressing electrode and an internal tapered surface and said pressing electrode engages either said internal tapered surface for carrying out an internal tapered surface pressing method or said top surface for carrying out a top pressing surface method.

According to an embodiment of the invention, the minimal inner diameters of all of said valve seats are larger than the minimal diameters of the associated intake and exhaust passages upstream or downstream of said valve seats. Thereby, it is advantageous when each of said intake and exhaust ports are provided with tapered surfaces continuing to face surfaces of the corresponding valve seats and when the smallest inner diameter of each valve seat is positioned on the respective tapered surface.

In order to enhance the bond strength of a small valve seat, it is advantageous when the cross-section of said valve seat is triangularly shaped, whereby one corner of which is directed to the cylinder head.

According to another embodiment of the invention, said plastically deformed layer comprises a solid state diffusion layer, whereby it is advantageous when said valve seats are composed of sintered material mainly comprising iron infiltrated with metal deposits having high electric conductivity, such as copper.

An enhanced gas exchange is obtainable when the open area of said intake port or ports are larger than the opening area of said exhaust port or ports. In this case, it is advantageous when said intake and exhaust ports are disposed close to the center of a dome of said combustion chamber having a nearly ideal spherical shape.

The longevity of such a valve seat is enhancable when the material of said valve seat has a percentage elongation of rupture of at least 1% at room temperature. Such a material may comprise iron as a base material whereby the following components are added:
1.0 - 1.6 wt% of C,
1.0 - 3.0 wt% of Ni,
5.5 - 8.0 wt% of Cr,
0.3 - 0.8 wt% of Mo,
5.0 - 8.0 wt% of Co,
11.0 - 18.0 wt% of Cu, and
1.5 - 3.0 wt% of W.

According to another embodiment of the invention, said valve seat is made of iron based sintered alloy and metallurgically bonded to a portion of the cylinder head along a bond interface where a plastically deformed layer of the cylinder head alloy is formed. Thereby, it is advantageous when in said plastically deformed layer formed along said bond interface dendrite crystals and columnar crystals are curved by the pressing step.

According to still another embodiment of the invention, the level of chemical components present in said plastically deformed layer is substantially held constant in a region of said plastically deformed layer up to 10 µm from said bond interface during forming said plastically deformed layer.

In some cases, it may be advantageous when a further plastically deformed layer is formed between said bond interface and said valve seat to enhance the bonding strength.

Other preferred embodiments of the present invention are laid down in further dependent claims.

According to one embodiment of the invention, since the valve seat insert is joined to the cylinder head, cracks will not be caused even on the cylinder head for multi-valve engines. Further, large seats required around the intake and exhaust ports of the cylinder head for press-fitting the valve seat insert becomes unnecessary, and, further, since the smallest inner diameter of the valve seat insert is set larger than the intake and exhaust passage throat portion diameters of the cylinder head, it is possible to bring the intake and exhaust passages closer to the combustion chamber, and the height of the cylinder head, in turn, the total height of the engine including the intake and exhaust system components can be restrained lower relieving the limitation on the engine design, while the projection length of the valve guide into the intake and exhaust passages can be restrained smaller, which reduces the gas flow resistance in the intake and exhaust passages and serves for improving the engine performance.

Further, since the angle formed between the throat portions of the intake and exhaust passages and the cylinder head mating surface is restrained smaller by bringing the intake and exhaust passages closer to the combustion chamber, formation of the intake tumble in the combustion chamber is promoted, the combustion efficiency of the mixture is raised, and the fuel consumption and the exhaust gas property of the engine is improved.

On a multi-valve engine provided with a plurality of intake and exhaust ports for one cylinder, since the valve ports can be disposed collectively near the center of the combustion dome by reducing the distances between adjacent valve ports and the distances between the ignition plug hole and the valve ports, while the formation of intake tumble in the combustion chamber is promoted, the valve intake flow is prevented from being interfered by the cylinder wall and the combustion chamber can be of a nearly ideal spherical shape; therefore, the combustion efficiency of the mixture in the combustion chamber is raised, and the fuel consumption and the exhaust gas property of the engine is improved. In addition, it becomes possible to raise the flow coefficient by enlarging the port diameters and employing intake and exhaust valves having larger diameters to improve the engine performance.

According to another embodiment of the invention, the structure of the above described embodiment (structure in which the smallest inner diameter of the valve seat insert is larger than the diameter of the throat portion of the intake or exhaust passage of the cylinder head) can be easily realized.

With the constitution described above, when bonding the seat ring metallurgically to the cylinder head body without leaving the melt reaction layer, the bond strength on the steep surface is significantly improved without causing cracks to occur by employing the internal tapered surface pressing method, namely the method in which the pressing force applied by the electrode is exerted from the internal tapered surface of the seat ring equally to the steep surface and the bottom surface of the seat ring.

In other words, although the pressing force applied by the electrode by employing the internal tapered surface pressing method works in the direction to expand the seat ring radially outward, the valve seat does not produce cracks because the valve seat material for the seat ring at room temperature has an elongation at rupture of 1% or more (while the elongation at rupture of conventional material is about 0.2%).

In the following, the present invention is explained in greater detail with respect to several embodiments thereof in conjunction with the accompanying drawings, wherein:
Fig.1 is a vertical sectional view of a cylinder head provided with a structure according to this invention,
Fig.2 is a bottom view (view from the combustion chamber side) of a cylinder head provided with a structure according to this invention,
Fig.3 is a sectional view of the valve seat portion and its circumference of a cylinder head provided with a structure according to this invention,
Fig.4 is a sectional view showing the valve seat joining procedure (before joining),
Fig.5 is a sectional view showing the valve seat joining procedure (after joining),
Fig.6 is a sectional view showing the valve seat joining procedure (after machining), and
Fig.7 is a sectional view showing a conventional cylinder head structure.
FIG. 8 is a cross-sectional view of an essential part of a cylinder head employing a valve seat of this invention.
FIG. 9 is an enlarged cross-sectional partial view around the valve seat shown in FIG. 1.
FIG. 10 is a group of drawings for explaining the steps of one example method (internal tapered surface pressing method) for metallurgically bonding the valve seat to the cylinder head body without leaving a melt reaction layer.
FIg. 11 is a group of drawings for explaining the steps of the other example method (top surface pressing method) for metallurgically bonding the valve seat to the cylinder head body without leaving a melt reaction layer.
FIG.12 is an explanatory drawing of a typical example of current pattern and pressing force pattern for metallurgically bonding the valve seat to the cylinder head body without leaving a melt reaction layer using a resistance welding machine.
FIG. 13 is an explanatory drawing showing an example structure in the vicinity of the bond interface in the cylinder head in which the valve seat is metallurgically bonded to the cylinder head body without leaving a melt reaction layer.
FIG. 14 is a schematic cross-sectional view showing the thickness of the intermetallic compound layer on the cylinder head in which the valve seat is metallurgically bonded to the cylinder head body without leaving a melt reaction layer.
FIG. 15 is a graph showing the relationship between the bond strength and the intermetallic compound layer on thickness.
FIG. 16 is an explanatory drawing showing another example structure in the vicinity of the bond interface in the cylinder head in which the valve seat is metallurgically bonded to the cylinder head body without leaving a melt reaction layer.
FIG. 17 shows two heat treatment process patterns respectively for the conventional valve seat material and the valve seat material for this invention
FIG. 18 is a graph showing the relationship between the valve seat crack occurrence rate and the valve seat material elongation.
FIG. 19 is a graph showing the bond strength test results for various types of valve seats formed with different materials and bonding methods.
FIG. 20 is a group of drawings for explaining every type of the valve seats subjected to the bond strength test shown in FIG. 19.

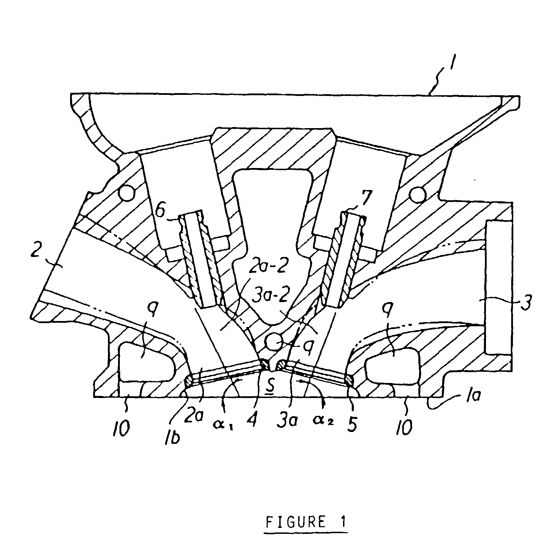

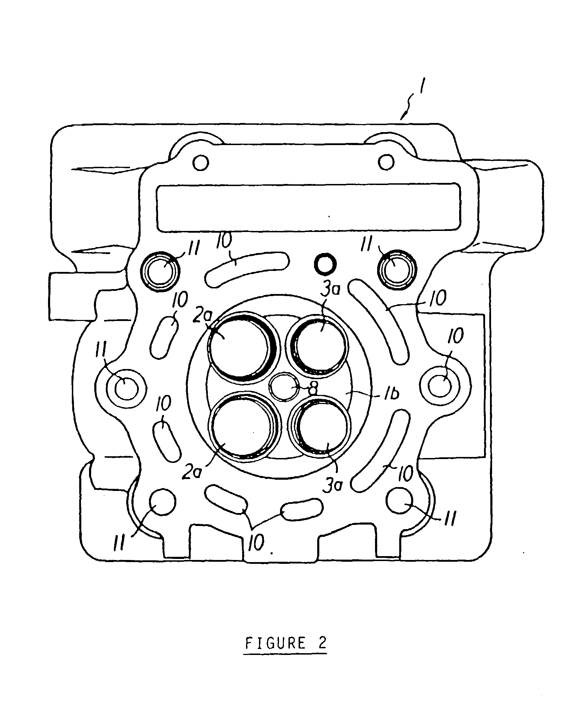

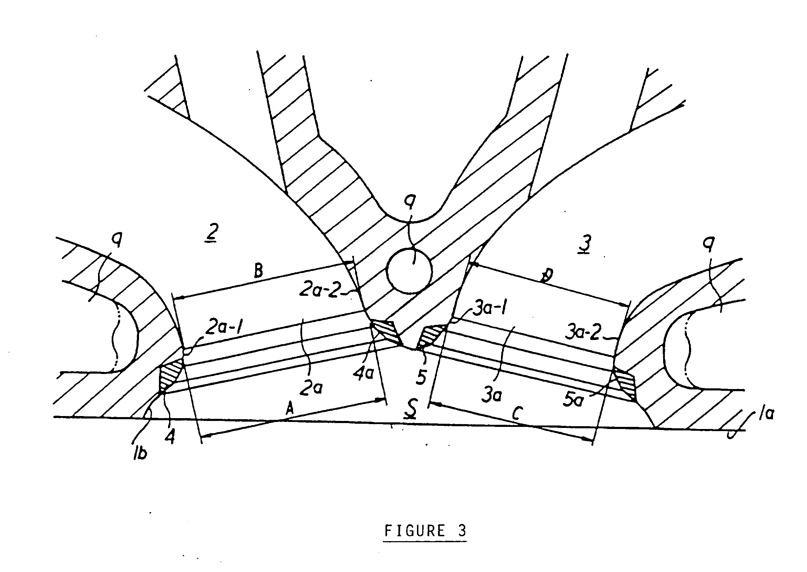

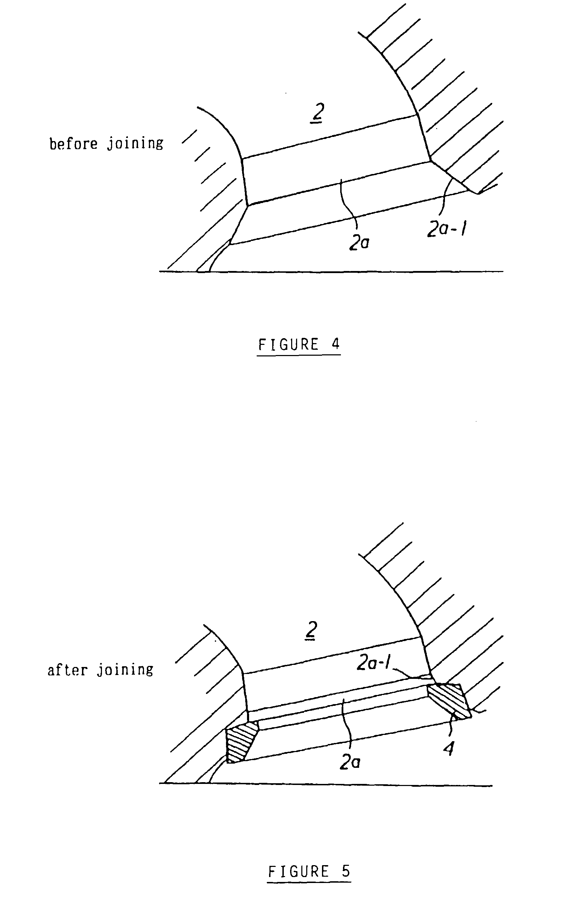

Fig.1 is a vertical sectional view of a cylinder head provided with a structure according to this invention, Fig.2 is a bottom view (view from the combustion chamber side) of the cylinder head above, Fig.3 is a sectional view of the valve seat portion of the cylinder head above and its circumference in a larger scale, and Figs.4 through 6 are sectional views showing the procedure for joining the valve seat insert to the cylinder head (before joining, after joining and after machining).

The cylinder head 1 according to this invention is for use on a 4-cycle 4-valve engine, is integrally cast of aluminium alloy, and has two intake passages 2 and two exhaust passages 3 (only one is shown for each in the drawing) formed therethrough as shown in Fig. 1.

The mating surface 1a (the surface to be mated with the cylinder body not shown) of the cylinder head 1 has a combustion chamber dome 1b constituting a combustion chamber S, and the intake and exhaust passages 2 and 3 are opened into the combustion chamber S as the intake port 2a and the exhaust port 3a. respectively. To the peripheral edges of the intake and exhaust ports 2a and 3a are joined ring-like valve seat inserts 4 and 5, respectively, by a method to be described later, and the intake and exhaust ports 2a and 3a are opened and closed at appropriate timings by an intake valve and an exhaust valve (not shown), respectively, inserted through the cylindrical valve guide 6 and 7, and on the valve seat 4 and 5 are intermittently seated the intake valve and the exhaust valve, respectively.

Referring to Fig.3, here is described in detail the structure of the portions of the intake port 2a and exhaust port 3a of the cylinder head 1 on which the valve seat inserts 4 and 5 are installed.

As shown in Fig. 3, the portion of the intake passage 2 close to the intake port 2a and the portion of the exhaust passage 3 close to the exhaust port 3a have tapered surfaces 2a-1 and 3a-1, respectively, expanding toward the combustion chamber S. The tapered surface 2a-1 is continued to the throat portion 2a-2 and to the face surface (surface on which the intake valve is seated) 4a of the valve seat 4, while the tapered surface 3a-1 is continued to the throat portion 3a-2 of the exhaust passage 3 and to the face surface (surface on which the exhaust valve is seated) 5a of the valve seat 5.

In this embodiment, the smallest inner diameters A and C of the valve seats 4 and 5 are larger than the inner diameters B of the throat portion 2a-2 of the intake passage 2 and D of the throat portion 3a-2 of the exhaust passage 3, respectively (A>B, C>D), and the ends of the smallest inner diameter of the valve seats 4 and 5 are positioned on the tapered surfaces 2a-1 and 3a-1 of the intake passage 2 and exhaust passage 3, respectively.

As shown in Fig.2, the cylinder head 1 has an ignition plug hole 8 opened through the central (top) portion of the combustion chamber dome 1b in which two intake ports 2a and two exhaust ports 3a are disposed so as to surround the ignition plug hole as a center.

As shown in Fig. 1, around the valve seats 4 and 5 of the cylinder head 1 are formed water jackets 9, which are made to communicate with water jackets formed in the cylinder body (not shown) through passages 10 opened through the mating surface (bottom surface) of the cylinder head 1. The numerals 11 in Fig.2 denote cylinder head bolt holes.

Next are described the valve seats 4 and 5.

The valve seats 4 and 5 are composed of sintered material obtained through a powder metallurgical method. The sintered material is formed by bonding many powder particles mainly of Fe, and its vacancy is filled with metal such as Cu having high electric conductivity by infiltration treatment.

The valve seat 4 is joined to the peripheral edge of the intake port 2a through a procedure shown in Figs.4 through 6. The other valve seat 5 is joined to the peripheral edge of the exhaust port 3a through a similar procedure and its detailed description is omitted here.

Before joining the valve seat 4, the intake port 2a of the cylinder head 1 has a tapered surface 2a-1 formed on the peripheral edge thereof so as to be expanded downward as shown in Fig.4, and a valve seat 4 composed of ferrous material having a hardness higher than the cylinder head 1 made of aluminium alloy is metallurgically joined to this tapered surface 2a-1 as shown in Fig.5 by means of a resistance welder (not shown).

That is, the valve seat 4 is set in a state with its back surface in contact with the tapered surface 2a-1 of the intake port 2a, and, after being pressed against the tapered surface 2a-1 by the electrode of the welder with a predetermined force, electric current is turned on. Then, the cylinder head made of aluminium alloy having a hardness lower than the valve seat 4 composed of ferrous material is plastically deformed, and, in a state with the valve seat 4 embedded in the cylinder head 1 as shown in Fig.5, both members are metallurgically joined and integrated by a reaction by solid phase diffusion at their boundary surface (this is a reaction between solids, and, in this instance, both valve seat 4 and cylinder head 1 are not in melted state).

Then, the joining portion of the valve seat 4 is cooled and the unnecessary portion is cut off by machining to be finished into a final shape, and joined to integrate with the peripheral edge portion of the intake port 2a of the cylinder head 1 as shown in Fig. 6.

Hereupon, in case where the valve seat is press-fitted in the peripheral edge portion of the intake and exhaust ports as usual, the intake and exhaust passages can not be brought so close to each other from reasons described above, and these passages have been formed as shown with dash-and-double-dotted lines in Fig. 1.

In contrast to this, in this embodiment, since the valve seats 4 and 5 are joined to the peripheral edges of the intake port 2a and exhaust port 3a, large seats so far required in the intake passage 2 and exhaust passage 3 for press fitting becomes unnecessary, and, further, since the smallest inner diameters A and C of the valve seats 4 and 5 are larger than the inner diameter B and D of the throat portions 2a-2 and 3a-2 of the intake passage 2 and exhaust passage 3 (A>B, C>D), respectively, the intake passage 2 and the exhaust passage 3 can be formed as shown with solid lines in Fig.1 as against the conventional form shown with dash-and-double-dotted lines in Fig.1, and, by bringing these passages 2 and 3 closer to the combustion chamber S, the angles α₁ and α₂ formed between the mating surface 1a of the cylinder head 1 and the throat portions 2a-2 and 3a-2 can be restrained smaller than the conventional ones.

By bringing the intake passage 2 and the exhaust passage 3 closer to the combustion chamber S, the height of the cylinder head 1, in turn, the total height of the engine, can be restrained lower, and, consequently, the engine design limitation is relieved. Especially on motorcycles, it is achieved by reducing the total height of the engine that the seat height can be restrained lower, foot rest comfortability is improved and the freedom of frame handling is increased.

Further, since the lengths of projection of the valve guides 6 and 7 into the intake and exhaust passages 2 and 3 can be restrained smaller and the gas flow resistance of the intake air in the intake passage 2 and exhaust gas in the exhaust passage 3 can be restrained smaller by bringing the intake passage 2 and the exhaust passage 3 closer to the combustion chamber, the engine performance can be improved.

Further, since the angles α₁ and α₂ formed between the throat portions 2a-2 and 3a-2 of the intake and exhaust passages 2 and 3 and the mating surface 1a of the cylinder head 1 is restrained smaller, formation of intake tumble in the combustion chamber is promoted, combustion efficiency of the mixture in the combustion chamber S is raised, and the fuel consumption of the engine is improved.

In addition, although the distance between the intake and exhaust ports 2a and 3a becomes smaller because the cylinder head 1 for the 4-valve engine related to this embodiment is provided with two intake ports 2a and two exhaust ports 3a, since these intake and exhaust ports 2a and 3a have valve seats 4 and 5 joined thereto through sufficiently small sectional areas, cracks due to strength deficiency will not be caused in the cylinder head 1.

Hereupon, if a system is employed in which the valve seat inserts 4 and 5 are joined to the cylinder head 1 as is the case with this embodiment, since the wall thicknesses around the intake ports 2a and exhaust ports 3a can be reduced while the wall thicknesses of the valve seats 4 and 5 can be reduced, the water jackets 9 so far having had a sectional form shown in Fig.3 with dash-and-double-dotted lines can be formed all around the valve seats 4 and 5 while the water jackets 9 can be brought closer to the valve seats 4 and 5. Consequently, since the sectional area of the water jacket 9 is increased and the valve seats 4, 5 and their circumference are efficiently cooled, the surface temperature of the valve seats 4 and 5 and the temperatures of the intake and exhaust valves are lowered and their abnormal wears are prevented, which improves their durability. In addition, it becomes possible to replace their material with cheaper one, and further it becomes possible to improve the anti-knock property of the engine.

Further, deformations of the valve seats 4 and 5 and intake and exhaust valves are restrained smaller, engine performance is improved, and fuel consumption and exhaust gas property are improved.

Further, since the strength of the intake and exhaust valves gains some margin as the result of their temperature drop, it becomes possible to reduce the diameters of their stems or to reduce the thickness of their bevel portions, which makes it possible to reduce the resistance against intake and exhaust gas flows to improve the engine performance.

On the other hand, since this embodiment has two intake ports 2a and two exhaust ports 3a provided on the cylinder head 1 as shown in Fig.2, and the ports 2a and 3a are disposed collectively near the center of the combustion chamber dome 1b by reducing the distance between adjacent ports 2a and 3a and the distance between the ports 2a, 3a and the ignition plug hole 8, the intake tumble formation in the combustion chamber S is promoted, and, in addition, the valve intake air flow is prevented from being interfered with the cylinder wall the combustion chamber S can be of a nearly ideal spherical form, which improves the combustion efficiency of the mixture in the combustion chamber S and improves the engine fuel consumption and exhaust gas property.

Further, since the distance between adjacent ports 2a and 3a and the distance between the ports 2a , 3a and the ignition plug hole 8 are reduced, it is possible to improve the engine performance by raising the flow coefficient by employing larger diameter intake and exhaust valves by enlarging the diameters of the ports 2a and 3a.

Although the description above refers particularly to the cylinder head structure of a 4-valve engine , this invention can be of course applied to the cylinder head structure for other multi-valve engine.

As is clear from the description above, since the cylinder head according to this invention has a valve seat insert composed of material different from that of the cylinder head and installed on the peripheral edge of each intake and exhaust port portion through joining, and the smallest inner diameter of the valve seat insert is made larger than the throat diameter of the corresponding intake or exhaust passage, effects are obtained that the intake passages and exhaust passages can be brought closer to the combustion chamber, the total height of the engine can be restrained lower and design limitation is relieved, which promotes reduction of the gas flow resistance and formation of intake tumble in the combustion chamber and serves for improving the engine performance and the fuel consumption.

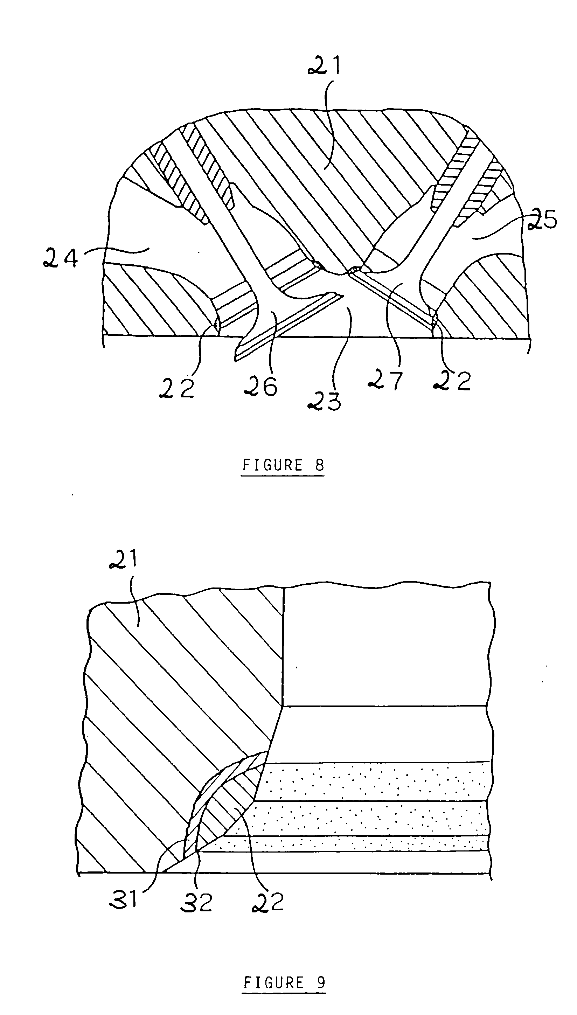

In the following, further embodiments will be described with reference to figures 8 to 20.

FIG. 8 shows an essential part of a cylinder head provided with a valve seat of this invention. The underside of a cylinder head body 21 is formed as a dome-shaped combustion chamber portion 23 which in turn is provided with an intake port 24 and an exhaust port 25 respectively having their openings to the combustion chamber 23 . On the opening periphery portion on the combustion chamber side of each of the ports 24 and 25 is integrally formed a ring-shaped valve seat 22 made of a material different from that of the cylinder head body 21 in the area where the intake or exhaust valve comes into tight contact when the valve is closed.

FIG. 9 is an enlarged cross-sectional partial view around the valve seat 22 of such a cylinder head. The cylinder head body 21 is made of aluminum alloy casting. The valve seat 22 is made of an iron-based sintered alloy and metallurgically bonded to the portion of the cylinder head body 21 along its bond interface 32 where a plastically deformed layer 31 of the aluminum alloy is formed.

The metallurgical bond described above between the cylinder head body 21 and the valve seat 22 of the cylinder head is essentially different from mechanical bond as in the case of press fit in which no atom diffusion occurs and the material is in a state of discontinuity, and is also different from the metallurgical bond such as the resistance heat welding in which interface contact resistance heat is utilized to locally melt both materials into molten alloy followed by deenergization for cooling and solidification.

In other words, the metallurgical bond described above is carried out between different types of materials without leaving a melt reaction layer to produce a continuous structure through mutual diffusion of atoms on the interface after the bonding without involving phase transformation such as melting and solidification on the interface after finish machining.

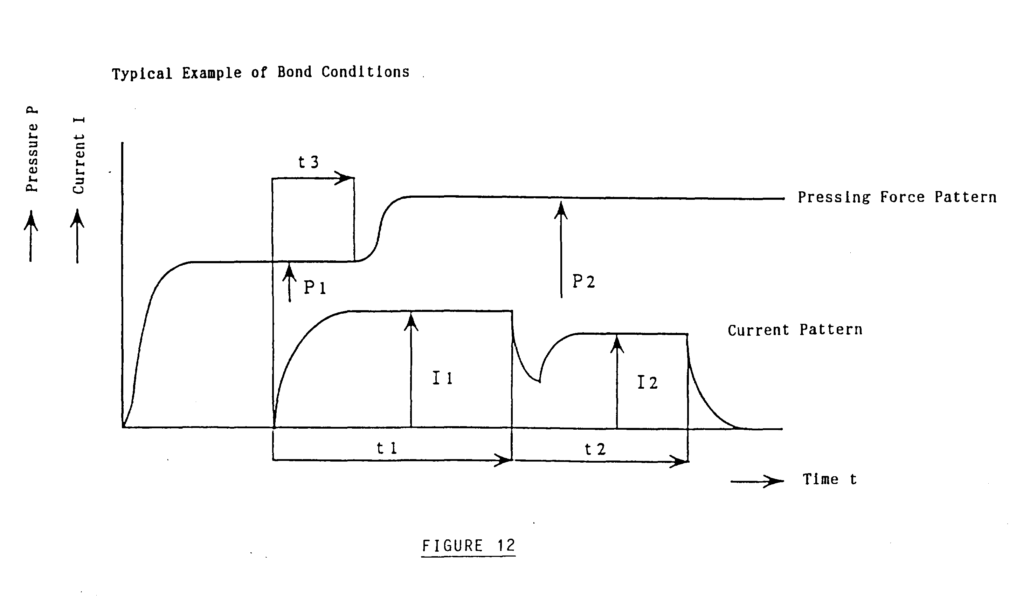

In order to carry out such a metallurgical bond without involving a melting and solidification reaction texture, no specially modified welding machine is required but an ordinary resistance welding machine suffices by setting conditions within the capacity of the machine as shown in FIG. 12 for the pressing force and the way of applying the current.

In the plastically deformed layer 31 formed on the cylinder head body 21 side along the metallurgically bonded bond interface, dendrite crystals and columnar crystals which are typical of the cast texture are curved. As a result, the aspect ratio of eutectic silicon particles is great, dislocation density is high due to dislocation caused by deformation, and hardness is high due to work hardening.

On the valve seat 22 side on the other hand, no nonuniformity typical of the hardness distribution and minute texture exists.

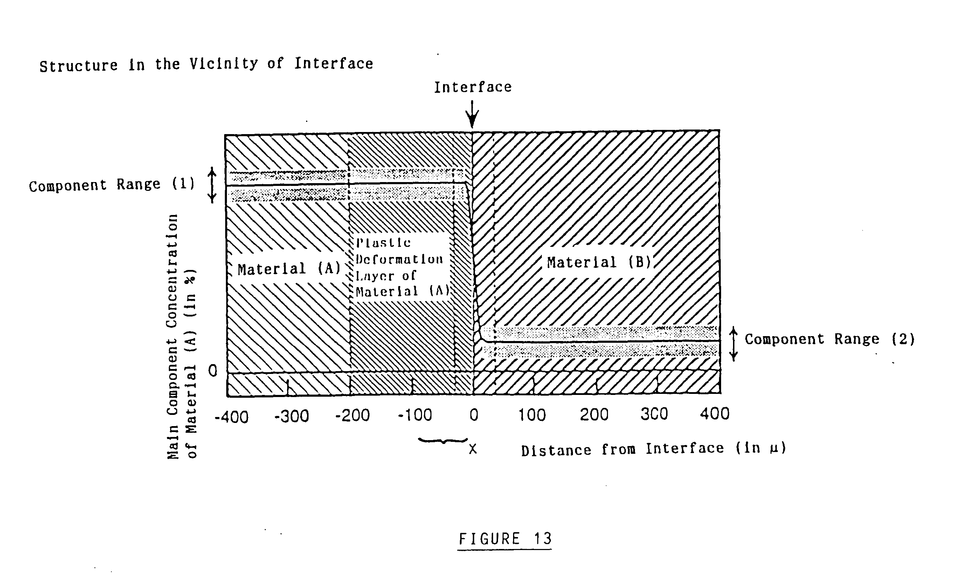

In the plastically deformed layer 31 , specific chemical components (Fe, Cu, Ni, etc. contained in aluminum alloy in this embodiment) contained therein are almost in the same range as those in the matrix material (material A ) within a depth of 10 micrometers from the bond interface surface as shown in FIG. 13.

Therefore, the diffusion layer of the specific chemical components in the vicinity of the plastically deformed layer 31 is restricted from expanding, and the thickness of an intermetallic compound layer formed between the plastically deformed layer (plastically deformed layer on the cylinder head body 21 side) of the material A and the material B (seat ring member 42 ) is restricted within 10 micrometers even when the engine is operated at high temperatures for extended periods of time.

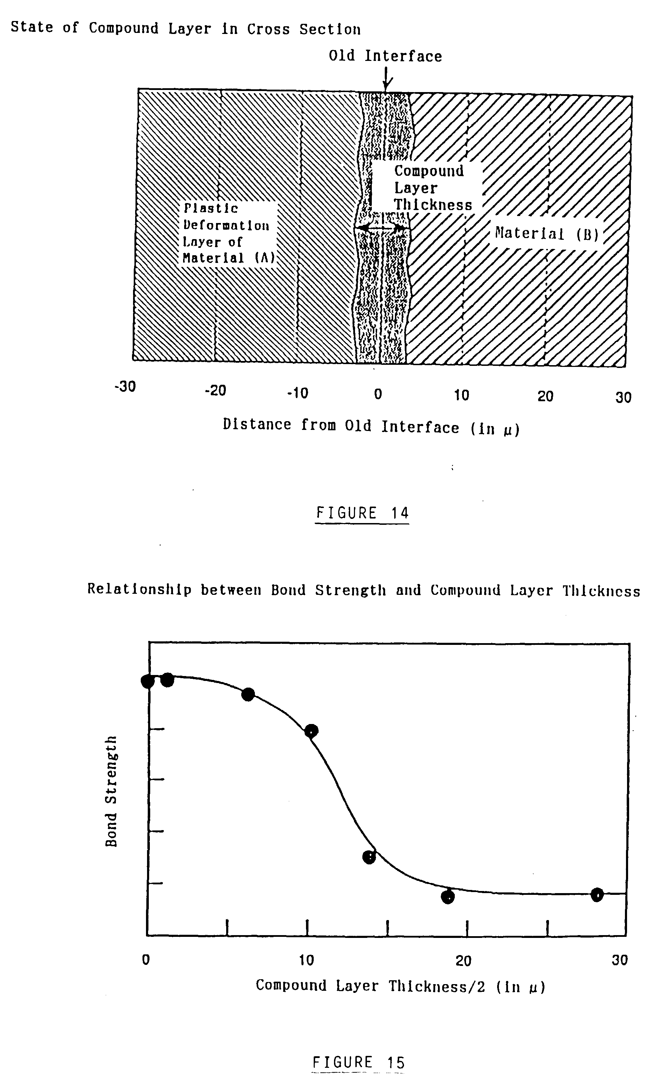

It has been confirmed for the relationship between the intermetallic compound layer thickness and the bond strength from the test results as shown in FIG. 15 that a certain bond strength is maintained as long as the intermetallic compound layer thickness is within 10 micrometers.

In this regard, about 200 micrometer wide alloy layer formed with both materials in molten state exists on the bond interface formed by the conventional laser cladding. During the engine operation at high temperatures, intermetallic compound is produced over a wide area in the alloy layer, posing a danger of deterioration in the bond strength.

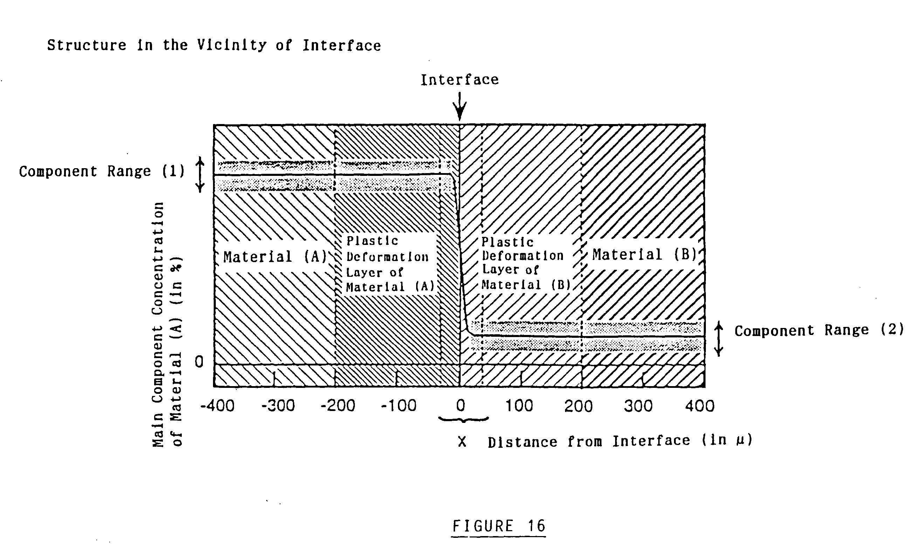

While the plastically deformed layer in the cylinder head described above is formed only on the cylinder head body 21 side, in some cases the layer may also be formed on the valve seat side depending on the material for the seat ring member. In that case, as shown in FIG. 16, not only for the plastically deformed layer of the material A (plastically deformed layer on the cylinder head body side) but also for the plastically deformed layer of the material B (plastically deformed layer on the seat ring member side), the specific chemical components contained in there are almost in the same range as those contained in the matrix material (material B ) within a depth of 10 micrometers from the bond interface surface.

With the cylinder head described above in which the valve seat is metallurgically bonded to the cylinder head body without leaving a melt reaction layer, the cross-sectional area of the valve seat 22 is made smaller than that of the valve seat formed by press fit. As a result, degree of freedom in the design around the cylinder head ports is increased, hindrance by the valve seat 22 against the heat transfer from valve faces and exhaust gas to the cylinder head body 21 is minimized, and resultant abnormal combustion and wear and damages due to thermal deterioration of the valves and valve seats are prevented.

Unlike the laser cladding for forming the valve seat, the method of this invention does not leave a melt reaction layer near the bond interface between the valve seat 22 and the cylinder head body 21 . Therefore, no defects such as blow holes and gross porosities exist near the bond interface between the valve seat 22 and the cylinder head body 21 Furthermore, since the deformation on the cylinder head body 21 side is large enough so that oxide coat on the aluminum alloy material surface is completely destroyed to cause mutual atom diffusion over the entire interface, a large bond strength is obtained, preventing the valve seat 22 from coming off during the engine operation.

Furthermore, since the specific chemical components (Fe, Cu, Ni, etc.) in the plastically deformed layer 31 formed on the cylinder head body 21 side are maintained within a certain range like those in the matrix material and the diffusion layer of the specific chemical components is restricted from expanding, the thickness of the intermetallic compound layer produced by the engine operation heat does not exceed 10 micrometers even after extended periods of operation at high temperatures to assure a bond of a high reliability without an adverse effect on the bond strength.

In order to metallurgically bond the valve seat to the cylinder head body without leaving the melt reaction layer as described above, the internal tapered surface pressing method as shown in FIGs.10(A)-10(F) or the top surface pressing method as shown in FIGs.11(A) - 11(F) is employed.

With the top surface pressing method, first the seat ring member 42 as the material for the valve seat 22 is set to the cylinder head body 21 . In that case, as the seat ring member 42 to be set, a member is used which has a relatively wide top surface 42a , an internal tapered surface 42b of a small size, and the entire surface copper-plated.

Next, the seat ring 42 is set so that the convex portion between the steep surface 42c and the bottom surface 42d comes in contact with the cylinder head body (1), and as shown in FIGs.11(B) - 11(D), the top surface 42a of the seat ring member 42 is pressed down with an electrode 29 coming down along a guide bar 28 , and current is applied to the electrode 29 while pressing the seat ring member 42 against the cylinder head body 21 .

Then, as shown in FIGs. 11(C) and 11(D), the seat ring member 42 , while plastically deforming the cylinder head body 21 having smaller deformation resistance than that of the seat ring member 42 , sinks into and bonds to the opening periphery in the cylinder head body 21 to form a plastically deformed layer 31 on the cylinder head body 21 side along the bond interface between the cylinder head body 21 and the seat ring member 42 .

Here, the copper plating layer deposited on the surface of the seat ring member 42 reacts with the aluminum alloy which is the material of the cylinder head body 21 and forms a locally molten liquid phase to accelerate the destruction of the oxide coat on the surface of the aluminum alloy. The liquid phase formed under that situation, however, is pressed out of the bonded portion by the pressing force for causing the plastic deformation on the cylinder head body 21 . As a result, no melt reaction layer remains in the metal bond portion.

As shown in FIG. 11(E), after the seat ring member 42 is bonded to the cylinder head body 21 and cooled, the cylinder head body 21 is finish cut machined so that the valve seat 22 made of a different material is formed integrally with the cylinder head body 21 with the plastically deformed layer 31 interposed between the two components.

With the internal tapered surface pressing method on the other hand, first, as shown in FIG. 10(A), the seat ring member 41, to be the material for the valve seat 22 is set to the cylinder head body 21 . In that case, as the seat ring member 41 for the setting, a member is used which is copper plated like the member used in the above case, but its internal tapered surface 41b is relatively wide and its top surface 41a is of a small shape.

Next, the seat ring 41 is set so that the convex portion between the steep surface 41c and the bottom surface 41d comes in contact with the cylinder head body 21 , and as shown in FIGs.11(B) - 11(D), the internal tapered surface 41b of the seat ring member 41 is pressed in the direction down outward with an electrode 29 coming down along a guide bar 28 , and current is applied to the electrode while pressing the seat ring member 42 against the cylinder head body 21 in the obliquely downward direction.

Then, as shown in FIGs.10(C) and 10(D), the seat ring member 41 , while plastically deforming the cylinder head body 21 having smaller deformation resistance than that of the seat ring member 41 , sinks into and bonds to the opening periphery in the cylinder head body 21 to form a plastically deformed layer 31 on the cylinder head body 21 side along the bond interface between the cylinder head body 21 and the seat ring member 41 .

Here, the copper plating layer deposited on the surface of the seat ring member 41 reacts with the aluminum alloy which is the material for the cylinder head body 21 and forms a locally molten liquid phase to accelerate the destruction of the oxide coat on the surface of the aluminum alloy. The liquid phase formed under that situation, however, is pressed out of the bonded portion by the pressing force for causing the plastic deformation on the cylinder head body 21 . As a result, no melt reaction layer remains in the metal bond portion.

As shown in FIG.10 (E), after the seat ring member 41 is bonded to the cylinder head body 21 and cooled, the cylinder head body 21 is finish cut machined so that the valve seat 22 made of a different material is formed integrally with the cylinder head body 21 with the plastically deformed layer 31 interposed between the two components, as shown in FIG.10(F).

When such a cylinder head is formed by the top surface pressing method as shown in FIG.11, since the pressing force applied by the electrode 29 works from the top side 42a of the seat ring 42 downward, the pressing force works in the direction to compress the seat ring 42 radially inward, there is no danger of breakage even if a conventional valve seat material were used. However, a problem arises that the bond strength on the steep side 42c is significantly weaker than that on the bottom side 42d of the seat ring 42 when the seat ring 42 is bonded to the cylinder head body 21 .

When the forming is made by the internal tapered surface pressing method on the other hand, since the pressing force applied by the electrode 29 works in the downward and outward directions from the internal tapered surface 41b approximately equally to the steep surface 41c and the bottom surface 41d so that the bond strength between the steep surface 41c and the cylinder head body 21 is significantly improved in comparison with that obtained with the top surface pressing method.

On the other hand, however, since the pressing force applied by the electrode 29 works to expand the seat ring 41 set to the cylinder head body 21 radially outward, a problem of a high probability of cracks produced arises if the conventional valve seat material were used.

Therefore, the valve seat of this embodiment employs, in order to solve the problem of cracks occurring in the case of the internal tapered surface pressing method as described above, a material having a percentage elongation at rupture of about 1% or more at room temperature, while that of the conventionally employed valve seat material is about 0.2%.

In other words, the material employed for the valve seat of this embodiment not only meets the requirements met by the conventional valve seat materials, namely such requirements as electric conductivity necessary in manufacturing process and hardness necessary for functioning as the valve seat, but also has a percentage elongation at rupture of 1% or more at room temperature (while that of the conventionally employed valve seat material is about 0.2%).

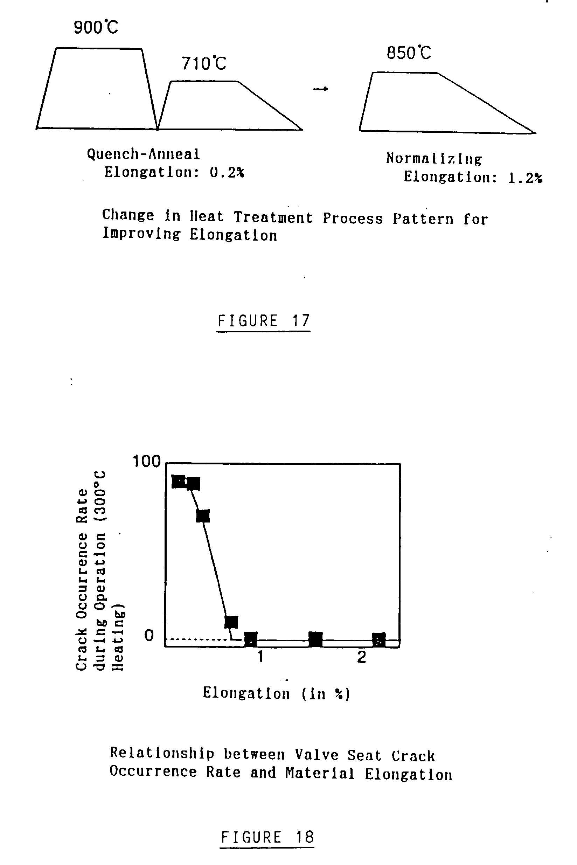

The valve seat material having the percentage elongation of 1% or more at room temperature is obtained as follows: To a base material of Fe, following chemical components are added (by weight percent): 1.0 - 1.6 of C, 1.0 - 3.0 of Ni, 5.5 - 8.0 of Cr, 0.3 - 0.8 of Mo, 5.0 - 8.0 of Co, 11.0 - 18.0 of Cu, 1.5 - 3.0 of W, and 1.0 or less of other constituents. Unlike the conventional material which is quenched and tempered as shown in FIG.17 respectively at 900°C and 700°C, the material of the above constitution is subjected to a different heat treatment, namely normalization at 850°C. The elongation of 1% or more at room temperature is also attained by changing the diameter of hard particles contained in the valve seat material textures from 100 micrometers to 50 micrometers.

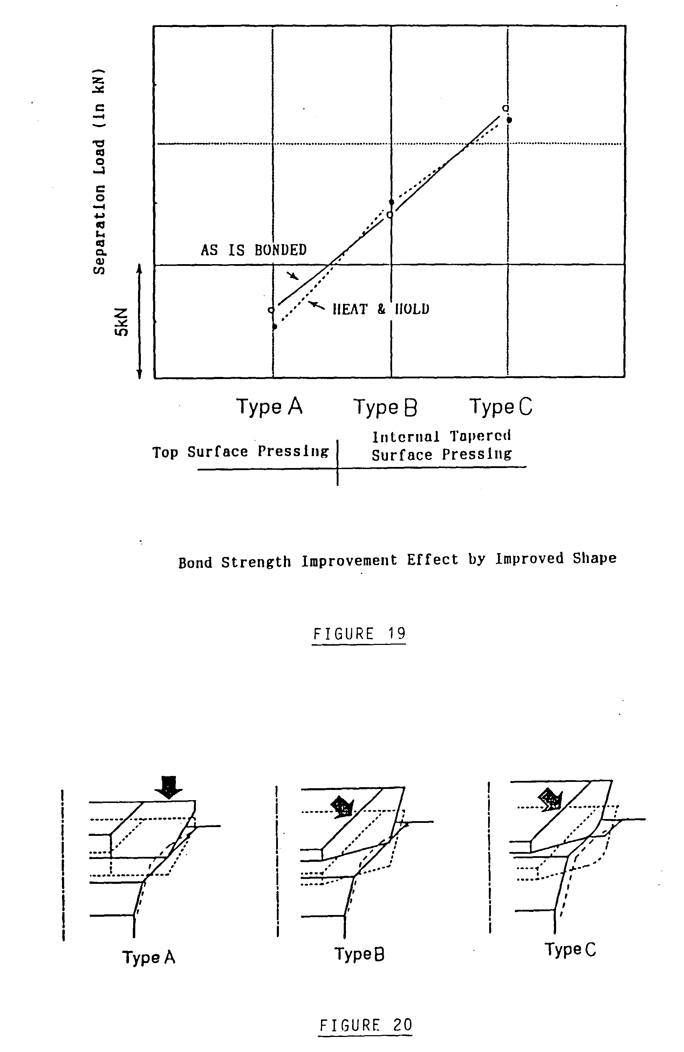

As shown in FIG. 18, the probability of occurrence of cracks in the seat ring 41 metallurgically bonded to the cylinder head body 21 by the inner tapered surface pressing method is clearly smaller with the seat ring 41 made of the valve seat material of the constitution of this embodiment described above than with a seat ring made of a material having a percentage elongation at rupture of 1% or less at room temperature.

FIG. 19 shows comparison test results of bond strengths for various types of valve seats when such a valve seat material is used for the seat ring 41 and the valve seat 22 is formed on the cylinder head body 21 by the internal tapered surface pressing method. The comparison was made between the state as it is bonded and the state after the bond is subjected (heated and held) to the temperature of 300°C for 24 hours. It is apparent from the test results that the bond strength of the valve seat 22 is higher with the internal tapered surface pressing method than with the top surface pressing method.

With the valve seat of this invention as described above, the bond strength of the valve seat metallurgically bonded to the cylinder head body without leaving melt reaction layer is significantly improved while restricting the occurrence of defects due to cracks.

## Claims

1. Cylinder head (1;21) in particular for a 4-cycle stroke internal combustion engine, comprising an air intake system having an intake passage (2) communicating with a combustion chamber (S) at an intake port (2a;24), an exhaust system having an exhaust passage (3) communicating with the combustion chamber (S) at an exhaust port (3a;25), and valve seats (4,5;41,42) on the peripheral edge of each intake and exhaust ports (2a,3a;24,25), a minimal inner diameter (A,C) of at least one of said valve seats (4,5;41,42) being larger than a minimal diameter (B,D) of an associated intake or exhaust passage (2,3) upstream or downstream of said valve seats (4,5;41,42), **characterized by** a plastically deformed layer (31) between said valve seat (4,5;41,42) and said cylinder head (1;21).

2. Cylinder head according to claim 1, **characterized in that** the minimal inner diameters (A,C) of all of said valve seats (4,5;41,42) are larger than the minimal diameters (B,D) of the associated intake and exhaust passages (2,3) upstream or downstream of said valve seats (4,5;41,42).

3. Cylinder head according to claim 1 or 2, **characterized in that** each of said intake and exhaust ports (2a;3a;24,25) are provided with tapered surfaces (2a-1,3a-1) continuing to face surfaces (4a,5a) of the corresponding valve seats (4,5) and that the smallest inner diameter (A,C) of each valve seat (4,5) is positioned on the respective tapered surfaces (2a-1,3a-1).

4. Cylinder head according to one of claims 1 to 3, **characterized in that** the cross-section of said valve seats (4,5) is triangularly shaped one corner of which is directed to the cylinder head (1;21).

5. Cylinder head according to one of claims 1 to 4, **characterized in that** said valve seats (4,5;41,42) are metallurgically bonded to said cylinder head (1;21).

6. Cylinder head according to claim 5, **characterized in that** said plastically deformed layer (31) comprises a solid-state diffusion layer.

7. Cylinder head according to at least one of claims 1 to 6, **characterized in that** said valve seats (4,5;41,42) are composed of sintered material mainly comprising iron infiltrated with metal deposits having high electric conductivity, such as copper.

8. Cylinder head according to one of claims 1 to 7, **characterized in that** the opening area of said intake port (2a;24) is larger than the opening area of said exhaust port (3a;25).

9. Cylinder head according to one of claims 1 to 8, **characterized in that** said intake and exhaust ports (2a,3a;24,25) are disposed close to the center of a dome (1b) of said combustion chamber (S) having a nearly ideal spherical shape.

10. Cylinder head according to of claims 1 to 9, **characterized by** two intake ports (2a;24) and two exhaust ports (3a;25).

11. Cylinder head according to one of claims 1 to 10, **characterized by** water jackets (9) arranged close to said valve seats (4,5;41,42).

12. Cylinder head according to one of claims 1 to 11, **characterized in that** the material of said valve seat (4,5;41,42) has a percentage elongation of rupture of at least 1% at room temperature.

13. Cylinder head according to one of claims 1 to 12, **characterized in that** between said plastically deformed layer (31) and said valve seat (4,5;41,42) a bond interface (32) is arranged.

14. Cylinder head according to claim 13, **characterized in that** within said plastically deformed layer (31) dendrite crystals and columnar crystals are curved.

15. Cylinder head according to claim 13 or 14, **characterized in that** the level of chemical components present in said plastically deformed layer (31) is substantially constant in a region of said plastically deformed layer (31) up to 10 µm from said bond interface (32).

16. Cylinder head according to one of claims 13 to 15, **characterized by** a further plastically deformed layer between said bond interface (32) and said valve seat (4,5;41,42).

17. Cylinder head according to claims 12 to 16, **characterized in that** the material of said valve seat (4,5;41,42) comprises iron (Fe) as a base material, wherein the following components are added:
1.0 - 1.6 wt% of C,
1.0 - 3.0 wt% of Ni,
5.5 - 8.0 wt% of Cr,
0.3 - 0.8 wt% of Mo,
5.0 - 8.0 wt% of Co,
11.0 - 18.0 wt% of Cu, and
1.5 - 3.0 wt% of W.

18. Method for producing a valve seat (22) within a cylinder head (21) according to at least one of the preceding claims 1 to 17, comprising the steps of:
(a) placing a valve seat insert (41, 42) onto the surface of an intake port or exhaust port, respectively within said cylinder head (21),
(b) applying a voltage between the abutting surfaces of said valve seat insert (41,42) and said cylinder head (21) and simultaneously pressing said valve seat insert (41,42) against said cylinder head (21) so that said valve seat insert (41,42) and said cylinder head (21) are metallurgically bonded with each other, and
(c) applying a finishing treatment to said bonded pieces to receive the desired valve seat (22), wherein said valve seat insert (22) comprises a top surface (41a,42a) opposing a pressing electrode (29) and an internal tapered surface (41b,42b) and said pressing electrode (29) engages either said internal tapered surface (41b,42b) for carrying out an internal tapered surface pressing method or said top surface (41a,42a) for carrying out a top pressing surface method, so as to form a plastically deformed layer between said valve seat and said cylinder head.

19. Method according to claim 18, **characterized in that** said valve seat (22) is made of iron-based sintered alloy and metallurgically bonded to a portion of the cylinder head (1;21) along a bond interface (32) where said plastically deformed layer (31) of the cylinder head alloy is formed.

20. Method according to claim 19, **characterized in that** in said plastically deformed layer (31) formed along said bond interface (32) dendrite crystals and columnar crystals are curved by said pressing step.

21. Method according to claim 19 or 20, **characterized in that** by forming said plastically deformed layer (31) the level of chemical components present in said plastically deformed layer (31) is substantially held constant in a region of said plastically deformed layer (31) up to 10 µm from said bond interface (32).

22. Method according to claims 19 to 21, **characterized in that** a further plastically deformed layer is formed between said bond interface (32) and said valve seat (22).

23. Method according to one of claims 18 to 22, **characterized in that** said valve seat (22) or said seat ring (41,42) respectively is made as follows:
a) adding to a base material of Fe the following chemical components:
1.0 - 1.6 wt% of C,
1.0 - 3.0 wt% of Ni,
5.5 - 8.0 wt% of Cr,
0.3 - 0.8 wt% of Mo,
5.0 - 8.0 wt% of Co,
11.0 - 18.0 wt% of Cu,
1.5 - 3.0 wt% of W, and
b) carrying out a normalization treatment at 850° C.

24. Method according to claims 18 to 23, **characterized in that** the diameter of hard particles contained in the textures of the valve seat material are changed from 100 µm to about 50 µm.

## Patentansprüche

1. Zylinderkopf (1; 21), insbesondere für eine 4-Takt-Brennkraftmaschine, die ein Lufteinlaßsystem, das einen Einlaßkanal (2) besitzt, der mit einer Verbrennungskammer (S) an einer Einlaßöffnung (2a; 24) kommuniziert, ein Auslaßsystem, das einen Auslaßkanal (3) besitzt, der mit der Verbrennungskammer (S) an einer Auslaßöffnung (3a; 25) kommuniziert, und Ventilsitze (4, 5; 41, 42) auf der peripheren Kante jeder Einlaß- und Auslaßöffnung (2a, 3a; 24, 25) aufweist, wobei ein minimaler, innerer Durchmesser (A, C) mindestens eines der Ventilsitze (4, 5; 41, 42) größer als ein minimaler Durchmesser (B, D) eines zugeordneten Einlaß- oder Auslaßkanals (2, 3) einströmseitig oder ausströmseitig der Ventilsitze (4, 5; 41, 42) ist, gekennzeichnet durch eine plastisch deformierte Schicht (31) zwischen dem Ventilsitz (4, 5; 41, 42) und dem Zylinderkopf (1; 21).

2. Zylinderkopf nach Anspruch 1, dadurch gekennzeichnet, daß die minimalen, inneren Durchmesser (A, C) aller Ventilsitze (4, 5; 41, 42) größer als die minimalen Durchmesser (B, D) der zugeordneten Einlaß- und Auslaßkanäle (2, 3) einströmseitig oder ausströmseitig der Ventilsitze (4, 5; 41, 42) sind.

3. Zylinderkopf nach Anspruch 1 oder 2, dadurch gekennzeichnet, daß jede der Einlaßund Auslaßöffnungen (2a, 3a; 24, 25) mit konischen Oberflächen (2a-1, 3a-1) versehen sind, die zu dazu hinweisenden Oberflächen (4a, 5a) der entsprechenden Ventilsitze (4, 5) fortführen, und daß der kleinste, innere Durchmesser (A, C) jedes Ventilsitzes (4, 5) auf den jeweiligen konischen Oberflächen (2a-1, 3a-1) positioniert ist.

4. Zylinderkopf nach einem der Ansprüche 1 bis 3, dadurch gekennzeichnet, daß der Querschnitt der Ventilsitze (4, 5) dreieckförmig geformt ist, wobei eine Ecke davon zu dem Zylinderkopf (1; 21) hin gerichtet ist.

5. Zylinderkopf nach einem der Ansprüche 1 bis 4, dadurch gekennzeichnet, daß die Ventilsitze (4, 5; 41, 42) metallurgisch an dem Zylinderkopf (1; 21) angebondet sind.

6. Zylinderkopf nach Anspruch 5, dadurch gekennzeichnet, daß die plastisch deformierte Schicht (31) eine Festkörperdiffusionsschicht aufweist.

7. Zylinderkopf nach mindestens einem der Ansprüche 1 bis 6, dadurch gekennzeichnet, daß die Ventilsitze (4, 5; 41, 42) aus gesintertem Material aufgebaut sind, das hauptsächlich Eisen, infiltriert mit Metallniederschlägen, die eine hohe, elektrische Leitfähigkeit besitzen, wie beispielsweise Kupfer, aufweist.

8. Zylinderkopf nach einem der Ansprüche 1 bis 7, dadurch gekennzeichnet, daß der Öffnungsflächenbereich der Einlaßöffnung (2a; 24) größer als der Öffnungsflächenbereich der Auslaßöffnung (3a; 25) ist.

9. Zylinderkopf nach einem der Ansprüche 1 bis 8, dadurch gekennzeichnet, daß die Einlaß- und Auslaßöffnungen (2a, 3a; 24, 25) nahe zu der Mitte eines Doms (1b) der Verbrennungskammer (S), mit einer nahezu idealen, sphärischen Form, angeordnet sind.

10. Zylinderkopf nach einem der Ansprüche 1 bis 9, gekennzeichnet durch zwei Einlaßöffnungen (2a; 24) und zwei Auslaßöffnungen (3a; 25).

11. Zylinderkopf nach einem der Ansprüche 1 bis 10, gekennzeichnet durch Wassermäntel (9), die nahe zu den Ventilsitzen (4, 5; 41, 42) angeordnet sind.

12. Zylinderkopf nach einem der Ansprüche 1 bis 11, dadurch gekennzeichnet, daß das Material des Ventilsitzes (4, 5; 41, 42) eine prozentuale Bruchdehnung von mindestens 1% bei Zimmertemperatur besitzt.

13. Zylinderkopf nach einem der Ansprüche 1 bis 12, dadurch gekennzeichnet, daß zwischen der plastisch deformierten Schicht (31) und dem Ventilsitz (4, 5; 41, 42) eine Verbindungszwischenfläche (32) angeordnet ist.

14. Zylinderkopf nach Anspruch 13, dadurch gekennzeichnet, daß innerhalb der plastisch deformierten Schicht (31) Dendritkristalle und Stengelkristalle gekrümmt sind.

15. Zylinderkopf nach Anspruch 13 oder 14, dadurch gekennzeichnet, daß das Niveau chemischer Komponenten, die in der plastisch deformierten Schicht (31) vorhanden sind, im wesentlichen konstant in einem Bereich der plastisch deformierten Schicht (31) bis zu 10 µm von der Verbindungszwischenfläche (32) aus ist.

16. Zylinderkopf nach einem der Ansprüche 13 bis 15, gekennzeichnet durch eine weitere, plastisch deformierte Schicht zwischen der Verbindungszwischenfläche (32) und dem Ventilsitz (4, 5; 41, 42).

17. Zylinderkopf nach den Ansprüchen 12 bis 16, dadurch gekennzeichnet, daß das Material des Ventilsitzes (4, 5; 41, 42) Eisen (Fe) als ein Basismaterial aufweist, wobei die folgenden Komponenten hinzugefügt sind:
1,0 - 1,6 Gewichts-% von C,
1,0 - 3,0 Gewichts-% von Ni,
5,5 - 8,0 Gewichts-% von Cr,
0,3 - 0,8 Gewichts-% von Mo
5,0 - 8,0 Gewichts-% von Co,
11,0 - 18,0 Gewichts-% von Cu, und
1,5 - 3,0 Gewichts-% von W.

18. Verfahren zum Herstellen eines Ventilsitzes (22) innerhalb eines Zylinderkopfs (21) nach mindestens einem der vohergehenden Ansprüche 1 bis 17, das die Schritte aufweist:
(a) Plazieren eines Ventilsitzeinsatzes (41, 42) auf der Oberfläche einer Einlaßöffnung oder Auslaßöffnung jeweils innerhalb des Zylinderkopfs (21),
(b) Anlegen einer Spannung zwischen den anstoßenden Oberflächen des Ventilsitzeinsatzes (41, 42) und des Zylinderkopfs (21) und gleichzeitiges Pressen des Ventilsitzeinsatzes (41, 42) gegen den Zylinderkopf (21), so daß der Ventilsitzeinsatz (41, 42) und der Zylinderkopf (21) metallurgisch aneinandergebondet werden, und
(c) Anwenden einer Endbearbeitungsbehandlung an den gebondeten Teilen, um den erwünschten Ventilsitz (22) aufzunehmen, wobei der Ventilsitzeinsatz (22) eine Oberseitenoberfläche (41a, 42a), einer Preßelektrode (29) gegenüberliegend, und eine innere, konische Oberfläche (41b, 42b) aufweist und die Preßelektrode (29) entweder in die innere, konische Oberfläche (41b, 42b) zum Ausführen eines Preßverfahrens mit innerer, konischer Oberfläche oder in die Oberseitenoberfläche (41a, 42a) zum Ausführen eines Oberseitenoberflächenpreßverfahrens eingreift, um so eine plastisch deformierte Schicht zwischen dem Ventilsitz und dem Zylinderkopf zu bilden.

19. Verfahren nach Anspruch 18, dadurch gekennzeichnet, daß der Ventilsitz (22) aus einer auf Eisen basierenden, gesinterten Legierung hergestellt ist und metallurgisch an einem Bereich des Zylinderkopfs (1; 21) entlang einer Verbindungszwischenfläche (32) angebondet ist, wo die plastisch deformierte Schicht (31) der Zylinderkopf-Legierung gebildet ist.

20. Verfahren nach Anspruch 19, dadurch gekennzeichnet, daß in der plastisch deformierten Schicht (31), die entlang der Verbindungszwischenfläche (32) gebildet ist, Dendritkristalle und Stengelkristalle durch den Preßschritt gekrümmt sind.

21. Verfahren nach Anspruch 19 oder 20, dadurch gekennzeichnet, daß durch Bilden der plastisch deformierten Schicht (31) das Niveau chemischer Komponenten, die in der plastisch deformierten Schicht (31) vorhanden sind, im wesentlichen konstant in einem Bereich der plastisch deformierten Schicht (31) bis zu 10 µm von der Verbindungszwischenfläche (32) aus gehalten wird.

22. Verfahren nach den Ansprüchen 19 bis 21, dadurch gekennzeichnet, daß eine weitere, plastisch deformierte Schicht zwischen der Verbindungszwischenfläche (32) und dem Ventilsitz (22) gebildet ist.

23. Verfahren nach einem der Ansprüche 18 bis 22, dadurch gekennzeichnet, daß der Ventilsitz (22) oder der Sitzring (41, 42) jeweils wie folgt hergestellt sind:
a) Hinzufügen zu einem Basismaterial aus Fe der folgenden, chemischen Komponenten:
1,0 - 1,6 Gewichts-%. aus C,
1,0 - 3,0 Gewichts-% aus Ni,
5,5 - 8,0 Gewichts-% aus Cr,
0,3 - 0,8 Gewichts-% aus Mo,
5,0 - 8,0 Gewichts-% aus Co,
11,0 - 18,0 Gewichts-% aus Cu,
1,5 - 3,0 Gewichts-% aus W, und
b) Ausführen einer Normalisierungsbehandlung bei 850°C.

24. Verfahren nach den Ansprüchen 18 bis 23, dadurch gekennzeichnet, daß der Durchmesser der harten Partikel, die in den Texturen des Ventilsitzmaterials enthalten sind, von 100 µm auf ungefähr 50 µm geändert wird.

## Revendications

1. Culasse (1 ; 21), en particulier pour un moteur à combustion interne à 4 temps, comprenant un système d'admission d'air ayant un passage d'admission (2) communiquant avec une chambre de combustion (S) au niveau d'un orifice d'admission (2a ; 24), un système d'échappement ayant un passage d'échappement (3) communiquant avec la chambre de combustion (S) au niveau d'un orifice d'échappement (3a ; 25), et des sièges de soupape (4, 5 ; 41, 42) sur le bord périphérique de chacun des orifices d'admission et d'échappement (2a, 3a ; 24, 25), un diamètre intérieur minimal (A, C) d'au moins un desdits sièges de soupape (4, 5 ; 41, 42) étant plus grand qu'un diamètre minimal (B, D) d'un passage associé d'admission ou d'échappement (2, 3) en amont ou en aval desdits sièges de soupape (4, 5 ; 41, 42), **caractérisée par** une couche déformée de façon plastique (31) entre ledit siège de soupape (4, 5 ; 41, 42) et ladite culasse (1 ; 21).

2. Culasse selon la revendication 1, **caractérisée en ce que** les diamètres intérieurs minimaux (A, C) de tous lesdits sièges de soupape (4, 5 ; 41, 42) sont plus grands que les diamètres minimaux (B, D) des passages associés d'admission et d'échappement (2, 3) en amont ou en aval desdits sièges de soupape (4, 5 ; 41, 42).

3. Culasse selon la revendication 1 ou 2, **caractérisée en ce que** chacun desdits orifices d'admission et d'échappement (2a , 3a ; 24, 25) est muni de surfaces allant en s'amincissant (2a-1, 3a-1) continuant vers des surfaces de face (4a, 5a) des sièges de soupape correspondants (4, 5) et en ce que le diamètre intérieur le plus petit (A, C) de chaque siège de soupape (4, 5) est positionné sur les surfaces respectives allant en s'amincissant (2a-1, 3a-1).

4. Culasse selon l'une des revendications 1 à 3, **caractérisée en ce que** la section transversale desdits sièges de soupape (4, 5) est de forme triangulaire dont un angle est dirigé vers la culasse (1 ; 21).

5. Culasse selon l'une des revendications 1 à 4, **caractérisée en ce que** lesdits sièges de soupape (4, 5 ; 41, 42) sont liés de façon métallurgique, à ladite culasse (1 ; 21).

6. Culasse selon la revendication 5, **caractérisée en ce que** ladite couche déformée de façon plastique (31) comprend une couche de diffusion à l'état solide.

7. Culasse selon au moins l'une des revendications 1 à 6, **caractérisée en ce que** lesdits sièges de soupape (4, 5 ; 41, 42) sont composés de matière frittée comprenant principalement du fer imbibé de dépôts métalliques ayant une conductivité électrique élevée, tels que du cuivre.

8. Culasse selon l'une des revendications 1 à 7, **caractérisée en ce que** la surface d'ouverture dudit orifice d'admission (2a ; 24) est plus grande que la surface d'ouverture dudit orifice d'échappement (3a ; 25).

9. Culasse selon l'une des revendications 1 à 8, **caractérisée en ce que** lesdits orifices d'admission et d'échappement (2a, 3a ; 24, 25) sont disposés proches du centre d'un dôme (1b) de ladite chambre de combustion (S) ayant une forme sphérique presque idéale.

10. Culasse selon l'une des revendications 1 à 9, **caractérisée par** deux orifices d'admission (2a ; 24) et deux orifices d'échappement (3a ; 25).

11. Culasse selon l'une des revendications 1 à 10, **caractérisée par** des chemises d'eau (9) agencées proches desdits sièges de soupape (4, 5 ; 41, 42).

12. Culasse selon l'une des revendications 1 à 11, **caractérisée en ce que** la matière dudit siège de soupape (4, 5 ; 41, 42) a un pourcentage d'allongement à la rupture d'au moins 1 % à température ambiante.

13. Culasse selon l'une des revendications 1 à 12, **caractérisée en ce qu'**une interface de liaison (32) est agencée entre ladite couche déformée de façon plastique (31) et ledit siège de soupape (4, 5 ; 41, 42).

14. Culasse selon la revendication 13, **caractérisée en ce que**, à l'intérieur de ladite couche déformée de façon plastique (31), des cristaux dendritiques et des cristaux basaltiques sont incurvés.

15. Culasse selon la revendication 13 ou 14, **caractérisée en ce que** la teneur des composants chimiques présents dans ladite couche déformée de façon plastique (31) est sensiblement constant dans une zone de ladite couche déformée de façon plastique (31) jusqu'à 10 µm à partir de ladite interface de liaison (32).

16. Culasse selon l'une des revendications 13 à 15, **caractérisée par** une couche supplémentaire déformée de façon plastique entre ladite interface de liaison (32) et ledit siège de soupape (4, 5 ; 41, 42).

17. Culasse selon les revendications 12 à 16, **caractérisée en ce que** la matière dudit siège de soupape (4, 5 ; 41, 42) comprend du fer (Fe) en tant que matière de base, dans laquelle les composants suivants sont ajoutés :
1,0 à 1,6 % en poids de C,
1,0 à 3,0 % en poids de Ni,
5,5 à 8,0 % en poids de Cr,
0,3 à 0,8 % en poids de Mo,
5,0 à 8,0 % en poids de Co,
11,0 à 18,0 % en poids de Cu, et
1,5 à 3,0 % en poids de W.

18. Procédé de production d'un siège de soupape (22) à l'intérieur d'une culasse (21) selon au moins l'une des revendications précédentes 1 à 17, comprenant les étapes suivantes :
(a) placement d'un insert de siège de soupape (41, 42) sur la surface d'un orifice d'admission ou d'un orifice d'échappement, respectivement à l'intérieur de ladite culasse (21),
(b) application d'une tension entre les surfaces en butée dudit insert de siège de soupape (41, 42) et de ladite culasse (21) et pression simultanée dudit insert de siège de soupape (41, 42) contre ladite culasse (21) de sorte que ledit insert de siège de soupape (41, 42) et ladite culasse (21) sont liés l'un à l'autre de façon métallurgique, et
(c) application d'un traitement de finition auxdites pièces liées pour recevoir le siège de soupape souhaité (22), dans lequel ledit insert de siège de soupape (22) comprend une surface de dessus (41a, 42a) opposée à une électrode de pression (29) et une surface interne allant en s'amincissant (41b, 42b) et ladite électrode de pression (29) est en prise soit avec ladite surface interne allant en s'amincissant (41b, 42b) pour exécuter un procédé de pression de surface interne allant en s'amincissant, soit avec ladite surface de dessus (41a, 42a) pour exécuter un procédé de pression de surface de dessus, de façon à former une couche déformée de façon plastique entre ledit siège de soupape et ladite culasse.

19. Procédé selon la revendication 18, **caractérisé en ce que** ledit siège de soupape (22) est fait en alliage fritté à base de fer et est lié de façon métallurgique à une partie de la culasse (1 ; 21) le long d'une interface de liaison (32) où ladite couche déformée de façon plastique (31) de l'alliage de culasse est formée.

20. Procédé selon la revendication 19, **caractérisé en ce que** dans ladite couche déformée de façon plastique (31) formée le long de ladite interface de liaison (32), des cristaux dendritiques et des cristaux basaltiques sont incurvés par ladite étape de pression.

21. Procédé selon la revendication 19 ou 20, **caractérisé en ce que**, en formant ladite couche déformée de façon plastique (31), la teneur des composants chimiques présents dans ladite couche déformée de façon plastique (31) est sensiblement maintenu constant dans une zone de ladite couche déformée de façon plastique (31) jusqu'à 10 µm à partir de ladite interface de liaison (32).

22. Procédé selon les revendications 19 à 21, **caractérisé en ce qu'**une couche supplémentaire déformée de façon plastique est formée entre ladite interface de liaison (32) et ledit siège de soupape (22).

23. Procédé selon l'une des revendications 18 à 22, **caractérisé en ce que** ledit siège de soupape (22) ou ledit anneau de siège (41, 42) est respectivement fait de la manière suivante :
a) ajout à une matière de base de Fe des composants chimiques suivants :
1,0 à 1,6 % en poids de C,
1,0 à 3,0 % en poids de Ni,
5,5 à 8,0 % en poids de Cr,
0,3 à 0,8 % en poids de Mo,
5,0 à 8,0 % en poids de Co,
11,0 à 18,0 % en poids de Cu,
1,5 à 3,0 % en poids de W, et
b) exécution d'un traitement de normalisation à 850 °C.

24. Procédé selon les revendications 18 à 23, **caractérisé en ce que** le diamètre des particules dures contenues dans les textures de la matière de siège de soupape est modifié de 100 µm à environ 50 µm.
